# EUROPÄISCHE PATENTANMELDUNG

(11) **EP 3 851 316 A1**
(43) Veröffentlichungstag der Anmeldung: **21.07.2021**
(21) Anmeldenummer: 20182971.0
(22) Anmeldetag: 29.06.2020
(51) Int. Cl.: B60L 53/54, B60L 53/57, F17C 5/06, B60L 53/10

(54) **SYSTEM ZUM AUFTANKEN VON FAHRZEUGEN MIT WASSERSTOFF-ELEKTRISCHEM ANTRIEB UND ZUM AUFLADEN VON FAHRZEUGEN MIT BATTERIE-ELEKTRISCHEM ANTRIEB**

(30) Priorität: 17.01.2020 EP 20152358
(71) Anmelder: H2 Energy AG, 8152 Glattpark (Opfikon) (CH)
(72) Erfinder: DIETRICH, Philipp, 5417 Untersiggenthal (CH); HUBER, Rolf, 8305 Dietlikon (CH); WALTER, Thomas, 8044 Zürich (CH)
(74) Vertreter: Fischer, Michael

(57) **Zusammenfassung**

Erfindungsgemäss wird ein System (2) zum Auftanken von Fahrzeugen mit wasserstoff-elektrischem Antrieb und zum Aufladen von Fahrzeugen mit batterie-elektrischem Antrieb offenbart, umfassend:
a) einen wiederbefüllbar ausgestalteten Wasserstoffspeicher (8) und/oder eine Wasserstoff-Pipeline (10) zur Versorgung des Systems (2), insbesondere einer Wasserstoff-Tankstelle, mit Wasserstoff;
b) mindestens einen ersten Förderstrang (12) zur Bereitstellung von aus dem Wasserstoffspeicher (8) und/oder von aus einer Wasserstoff-Pipeline (10) stammenden Wasserstoffs, vorzugsweise komprimiertem Wasserstoff, an mindestens einer Wasserstoffübergabevorrichtung (20a und 20b), insbesondere einer Zapfpistole;
c) mindestens eine Konvertierungseinheit (26) zur Konversion von Wasserstoff in elektrische Energie;
d) mindestens einen zweiten Förderstrang (22) zur Bereitstellung von aus dem Wasserstoffspeicher (8) und/oder aus der Wasserstoff-Pipeline (10) stammenden Wasserstoffs, vorzugsweise komprimierter Wasserstoff, an der mindestens einen Konvertierungseinheit (26); und
e) mindestens eine ausgangsseitig mit der mindestens einen Konvertierungseinheit (26) verbundene Aufladevorrichtung (30a bis 30d) mit mindestens einem Ladeplatz für die Fahrzeuge mit batterie-elektrischem Antrieb.

Die vorliegende Erfindung beschreibt die Nutzung der identischen Infrastruktur und Logistik der Energieversorgung von Wasserstoff-Tankstellen für die Betankung von Fahrzeugen mit wasserstoff-elektrischem Antrieb und für die Aufladung von Fahrzeugen mit batterie-elektrischem Antrieb.

## Beschreibung

Die vorliegende Erfindung bezieht sich auf ein System zum Auftanken von Fahrzeugen mit wasserstoff-elektrischem Antrieb und zum Aufladen von Fahrzeugen mit batterie-elektrischem Antrieb.

Die Anzahl von Fahrzeugen, die von einem elektrischen Motor angetrieben werden, steigt stetig an. In einigen Ländern weisen derartige Fahrzeuge bereits Anteile von > 10% an den Neuzulassungen auf. Dabei kann man zwischen Fahrzeugen mit wasserstoff-elektrischem Antrieb und Fahrzeugen mit batterie-elektrischem Antrieb unterscheiden. Beide Fahrzeugarten haben den Elektromotor zum Antrieb gemeinsam, nutzen zur Energiespeicherung aber in einem Fall Wasserstoff und im anderen Fall Batterien. Derzeit werden Fahrzeuge mit wasserstoff-elektrischem Antrieb an Wasserstoff-Tankstellen betankt und Fahrzeuge mit batterie-elektrischem Antrieb an Ladestationen aufgeladen. Beide Einrichtungen sind typischerweise räumlich und funktional vollständig getrennt und haben keine gemeinsame Energieversorgung.

In Zusammenhang mit der vorliegenden Erfindung können Fahrzeuge mit batterie-elektrischem Antrieb reine Batterie-Fahrzeuge (BEV = Battery Electric Vehicle) oder auch Mischformen mit einer Antriebskombination aus Verbrennungsmotor und Elektromotor, wie zum Beispiel PHEV (PHEV = Plug-in Hybrid Electric Vehicle), sein.

Zur Erzielung von möglichst kurzen Ladezeiten der Batterien von batterie-elektrischen Fahrzeugen kommen zunehmend sogenannte Schnelllader zum Einsatz, die über Ladeleistungen im Bereich 40 bis 150 kW verfügen. Neueste Geräte für Nutzfahrzeuge oder sportliche Fahrzeuge können bis 350 kW Ladeleistung anbieten. Jede Ladestation verfügt in der Regel über 2-4 Ladeplätze, die eine simultane Aufladung erlauben.

Die Schnellladestationen für batterie-elektrische Fahrzeuge werden typischerweise vom lokalen Mittelspannungsnetz versorgt. Am Einspeisepunkt wird dabei über einen Transformator die Mittelspannung auf das erforderliche Spannungsniveau (typisch 400 V) heruntertransformiert und die Schnellladestation damit versorgt. Zur Sicherstellung eines flächendeckenden Netzes von Schnellladestationen ist deshalb die Ergänzung des Mittelspannungsnetzes und der notwendigen Infrastruktur an den Ausspeisepunkten erforderlich, was mit hohen Investitionskosten verbunden sein kann. Je nach örtlicher Gegebenheit können die Kosten für den Aufbau der elektrischen Infrastruktur ein Vielfaches der eigentlichen Kosten für die Erstellung der Schnellladestationen betragen. Zudem erlauben die hohen Initialkosten für die Schaffung der elektrischen Infrastruktur typischerweise keine temporären Installationen um einen erhöhten und zeitlich beschränkten Ladebedarf, wie z. B. bei Grossveranstaltungen, in der Reisezeit oder in
Notfallsituationen, abzudecken.

Auch führt der Betrieb von netzgebundenen Schnellladestationen zu starken lokalen Netzbelastungen, die durch das erratische Aufladeverhalten der Fahrzeughalter und das relativ schnelle Ein-/Ausschalten der Schnelllader noch verstärkt werden.

Für die Betankung von Strassenfahrzeugen mit wasserstoff-elektrischem Antrieb wird derzeit in vielen Ländern ein flächendeckendes Wasserstoff-Tankstellennetz erstellt. Je nach Betreiber der Tankstelle wird dabei erneuerbarer oder auch nicht-erneuerbarer Wasserstoff angeboten.

Der vorliegenden Erfindung liegt daher die Aufgabe zugrunde, ein System zum Auftanken von Fahrzeugen mit wasserstoff-elektrischem Antrieb und zum Aufladen von Fahrzeugen mit batterie-elektrischem Antrieb anzugeben, das vergleichsweise einfach und mit geringen anfänglichen Investitionskosten mit einer räumlich ausreichenden Dichte zur Verfügung gestellt werden kann.

Die Aufgabe wird erfindungsgemäss durch das System gemäss Patentanspruch 1 gelöst. Im Einzelnen kann so ein System zum Auftanken von Fahrzeugen mit wasserstoff-elektrischem Antrieb und zum Aufladen von Fahrzeugen mit batterie-elektrischem Antrieb vorgesehen sein, welches die folgenden Komponenten umfasst:
a) einen wiederbefüllbar ausgestalteten Wasserstoffspeicher und/oder eine Wasserstoff-Pipeline zur Versorgung des Systems, insbesondere einer Wasserstoff-Tankstelle, mit Wasserstoff;
b) mindestens einen ersten Förderstrang zur Bereitstellung von aus dem Wasserstoffspeicher und/oder von aus einer Wasserstoff-Pipeline stammenden Wasserstoffs, vorzugsweise komprimiertem Wasserstoff, an mindestens einer Wasserstoffübergabevorrichtung, insbesondere einer Zapfpistole;
c) mindestens eine Konvertierungseinheit zur Konversion von Wasserstoff in elektrische Energie;
d) mindestens einen zweiten Förderstrang zur Bereitstellung von aus dem Wasserstoffspeicher und/oder aus der Wasserstoff-Pipeline stammenden Wasserstoffs, vorzugsweise komprimierter Wasserstoff, an der mindestens einen Konvertierungseinheit; und
e) mindestens eine ausgangsseitig mit der mindestens einen Konvertierungseinheit verbundene Aufladevorrichtung für die Fahrzeuge mit batterie-elektrischem Antrieb.

Vorteilhafte Ausgestaltungen der vorliegenden Erfindung sind den übrigen Unteransprüchen zu entnehmen.

Die vorliegende Erfindung beschreibt die Nutzung der identischen Wasserstoff-Infrastruktur und -Logistik der Haupt-Energieversorgung von Wasserstoff-Tankstellen für die Betankung von Fahrzeugen mit wasserstoff-elektrischem Antrieb und für die Aufladung von Fahrzeugen mit batterie-elektrischem Antrieb. Der Begriff «Haupt-Energieversorgung» ist hier bewusst gewählt worden, um zum Ausdruck bringen zu können, dass derartige Wasserstoff-Tankstellen durchaus auch einen Anschluss an das örtliche Stromversorgungsnetz mit vergleichsweise kleiner Leistungsaufnahme aufweisen können, beispielsweise für die Beleuchtung, den Betrieb der Kartenautomaten sowie der Wasserstoffzapfsäulen. Natürlich wäre es aber auch möglich, die Brennstoffzellen der Wasserstoff-Tankstelle nicht nur für den Betrieb der Schnellladestation, sondern auch für den Betriebsunterhalt der Wasserstoff-Tankstelle zu nutzen.

Die wesentlichen Erfolgsfaktoren für die Marktdurchdringung von batterie-elektrischen Fahrzeugen sind die Verfügbarkeit eines flächendeckenden Netzes von Ladestationen sowie die Sicherstellung eines hohen Ladekomforts. Die Erzielung kurzer Ladezeiten, die die Installation von sogenannten Schnellladern mit hohen Ladeleistungen erfordert, sowie die permanente Verfügbarkeit dieser Ladeleistungen sind die entscheidenden Grössen um ein hohes Mass an Ladekomfort zu gewährleisten.

Für die permanente Verfügbarkeit dieser hohen Ladeleistungen wird momentan der Weg beschritten, dass neben dem Ausbau des Stromversorgungsnetzes bis zur Ladestation auch eine ausreichende Kraftwerkskapazität permanent in Betrieb sein und dementsprechend vorgehalten werden muss. Dieser Vorhaltebetrieb der Kraftwerke ist mit grossen energetischen Verlusten verbunden und neben zusätzlichen Kosten werden auch zusätzliche CO2-Emissionen verursacht.

Des Weiteren verursacht der vermehrte Einsatz von erneuerbaren Energien eine deutlich stärkere Fluktuation der verfügbaren elektrischen Leistung und die Zwischenspeicherung von Energie über Tage oder sogar Wochen hinweg ist eine notwendige Voraussetzung zur Nutzbarkeit dieser erneuerbaren Energien für unsere Stromversorgung.

Mit der hohen gravimetrischen Energiedichte und der Möglichkeit die Produktion von der Nutzung zeitlich und örtlich zu entkoppeln, bietet im Sinne der vorliegenden Erfindung Wasserstoff als Energieträger eine gute Möglichkeit zur Zwischenspeicherung von Energie und zum Einsatz im Bereich des Strassentransports. Ist der Wasserstoff zudem aus erneuerbaren Energien produziert, so sind auch die nachfolgenden Anwendungen weitgehend emissions- und CO2-frei. Durch die Nutzung eines Wasserstoffspeichers oder einer Wasserstoff-Pipeline zur Betankung von wasserstoff-elektrischen Fahrzeugen und zur Konversion von Wasserstoff in elektrische Energie zur Aufladung von batterie-elektrischen Fahrzeugen können damit eine ganze Reihe dieser vorstehend genannten Probleme gelöst werden.

Aufwändige Ausbauten der Stromversorgungsinfrastruktur können gänzlich entfallen, weil der aus dem Wasserstoffspeicher oder der aus einer Wasserstoff-Pipeline entnommene Wasserstoff vor Ort in elektrische Energie umgewandelt werden kann. Besonders PEM-Brennstoffzellen bieten sich u.a. auch wegen der guten Skalierbarkeit durch Brennstoffzellen-Stacks für die Bereitstellung von elektrischer Energie hier an.

Die vorliegende Erfindung beschreibt so Vorrichtungen, mit Hilfe derer Wasserstoff sowohl für die direkte Betankung von Fahrzeugen mit wasserstoff-elektrischem Antrieb als auch für die Aufladung von Fahrzeugen mit batterie-elektrischem Antrieb verwendet werden kann.

Die Erfindung und Neuerung ist, dass die Energieversorgung für die Betankung und die Aufladung mit Hilfe von Wasserstoff dargestellt ist und von der Wasserstoffversorgung, beispielsweise dem Wasserstoffspeicher oder einer Wasserstoff-Pipeline einer Wasserstoff-Tankstelle, bewerkstelligt wird. Die Betankung von wasserstoff-elektrischen und die Aufladung von batterie-elektrischen Fahrzeugen sind unabhängig voneinander und können gleichzeitig oder auch nicht-gleichzeitig erfolgen. Zudem ergibt sich der Vorteil, dass an Wasserstoff-Tankstellen batterie-elektrische Fahrzeuge mit Schnellladern aufgeladen werden können, ohne dass ein Ausbau der Mittelspannungsinfrastruktur für die Ladestationen notwendig ist, wodurch wesentliche Kosten eingespart werden können.

Ein weiterer Vorteil einer besonders bevorzugten Ausgestaltung der vorliegenden Erfindung ist darin zu sehen, dass die wasserstoff-betriebene Schnellladestation zudem als mobile Einheit ausgestaltet sein kann und daher mit nur geringem Aufwand auf- und wieder abgebaut werden kann. Auf diese Weise eignet sie sich auch zur Standortentwicklung von neuen Orten mit Schnellladestationen. Diese werden anfänglich mit einer wasserstoff-betriebenen Ladestation ausgerüstet und können später auch, beispielsweise nach der Erreichung einer bestimmten Anzahl von täglichen Aufladungen, durch eine festinstallierte Netz-betriebene Schnellladestation ersetzt bzw. dazu ausgebaut werden. Die vormals installierte wasserstoff-betriebene Schnellladestation (mit optionaler Wasserstoff-Betankung) kann dann an einem neuen Ort aufgestellt und betrieben werden und so für die Standortentwicklung einer weiteren Schnellladestation genutzt werden.

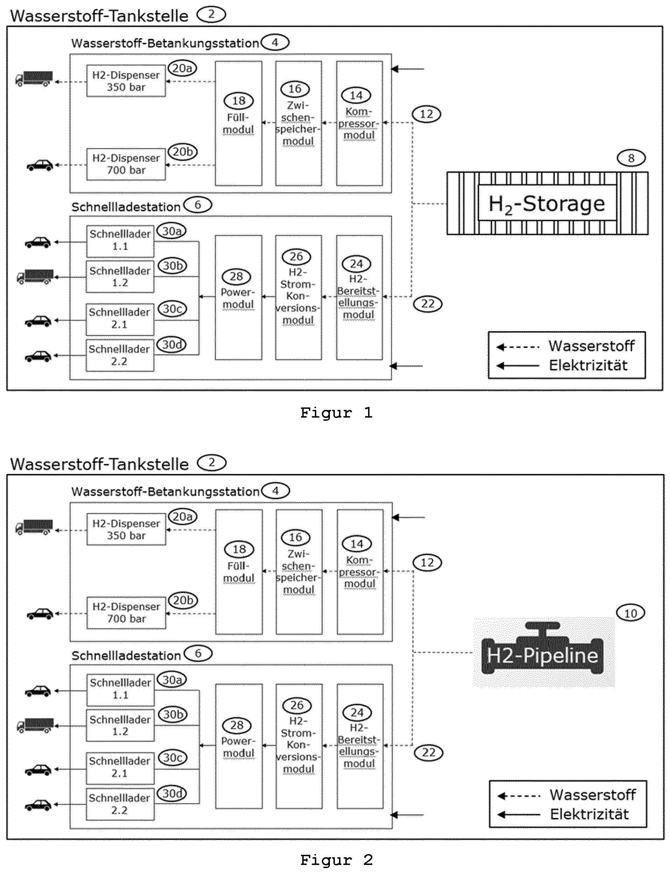

Bevorzugte Ausführungsbeispiele der vorliegenden Erfindung werden nachfolgend näher mit Bezug zu den anhängenden Zeichnungen erläutert. Beide Figuren 1 und 2 zeigen schematisch den Aufbau einer Wasserstoff-Tankstelle 2 mit der Wasserstoff-Betankungsstation 4 und der Schnellladestation 6, einmal mit einem Wasserstoff-Speicher 8 und einmal mit einer Wasserstoff-Pipeline 10 für die Wasserstoffversorgung der Wasserstoff-Tankstelle 2.

Die Wasserstoff-Tankstelle 2 umfasst den Wasserstoff-Speicher 8 und/oder die Wasserstoff-Pipeline 10 und für die Wasserstoffbetankung einen ersten Förderstrang 12 mit einem Kompressormodul 14, einem Zwischenspeichermodul 16, einem Füllmodul 18 sowie Wasserstoffabgabevorrichtungen, wie z.B. H₂-Dispenser 20a und 20b mit einem Druck von beispielsweise 350 und 700 bar, die als Zapfpistole gestaltet sein können. Für die Aufladung von batterie-elektrischen Fahrzeugen weist die Wasserstoff-Tankstelle 2 einen zweiten Förderstrang 22 mit einem Wasserstoff-Bereitstellungsmodul 24, einem Wasserstoff-zu-Strom-Konversionsmodul 26, wie z.B. eine BrennstoffzellenEinheit und/oder eine Gasturbine, ein Power-Modul 28, sowie Stromabgabevorrichtungen in Form von sogenannten Schnellladern 30a bis 30d auf.

Grundsätzlich können die Wasserstoff-Betankung und die Schnellladestation auch örtlich getrennt sein und jeweils von einem gleichen Wasserstoffspeicher oder einer gleichen Wasserstoff-Pipeline versorgt werden. Die vergleichsweise gute Transportierbarkeit von komprimiertem Wasserstoff in Druckbehältnissen (Druck typischerweise heute rund 350 bar) oder in Pipelines schafft dabei den grossen Vorteil, dass aufwändige Ausbauten des Mittelspannungsnetzes obsolet werden, weil die gleichzeitige Speisung der Wasserstoff-Betankungsstation und der den Schnellladern vorgeschalteten Brennstoffstellen und/oder einer vorgeschalteten Gasturbine vor Ort vorgenommen werden kann. Dabei können die Brennstoffzellen auch stack- oder sonst wie abschnittweise betrieben werden, sodass der Wirkungsgrad der gerade stromerzeugenden Brennstoffzellen auf einem optimalen Niveau eingestellt werden kann.

Weiter kann die für die Ladevorrichtung erzeugte und dort ggfs. nicht abgenommene elektrische Energie für andere Zwecke, insbesondere zur Einspeisung ins Netz, zum Betrieb von Wärmepumpen oder andere elektrische Anwendungen, nutzbar gemacht werden.

### Bezugszeichenliste

- 2: Wasserstoff-Tankstelle
- 4: Wasserstoff-Betankungsstation
- 6: Schnellladestation
- 8: Wasserstoff-Speicher
- 10: Wasserstoff-Pipeline
- 12: erster Förderstrang
- 14: Kompressormodul
- 16: Zwischenspeichermodul
- 18: Füllmodul
- 20a und 20b: H₂-Dispenser, beispielsweise als Zapfpistole ausgestaltet
- 22: zweiter Förderstrang
- 24: Wasserstoff-Bereitstellungsmodul
- 26: Wasserstoff-zu-Strom-Konversionsmodul
- 28: Power-Modul
- 30a bis 30d: Schnelllader, beispielsweise als Aufladevorrichtung ausgestaltet

## Patentansprüche

1. System zum Auftanken von Fahrzeugen mit wasserstoff-elektrischem Antrieb und zum Aufladen von Fahrzeugen mit batterie-elektrischem Antrieb, umfassend:
a) einen wiederbefüllbar ausgestalteten Wasserstoffspeicher (8) und/oder eine Wasserstoff-Pipeline (10) zur Versorgung des Systems (2), insbesondere einer Wasserstoff-Tankstelle, mit Wasserstoff;
b) mindestens einen ersten Förderstrang (12) zur Bereitstellung von aus dem Wasserstoffspeicher (8) und/oder von aus einer Wasserstoff-Pipeline (10) stammenden Wasserstoffs, vorzugsweise komprimiertem Wasserstoff, an mindestens einer Wasserstoffübergabevorrichtung (20a und 20b), insbesondere einer Zapfpistole;
c) mindestens eine Konvertierungseinheit (26) zur Konversion von Wasserstoff in elektrische Energie;
d) mindestens einen zweiten Förderstrang (22) zur Bereitstellung von aus dem Wasserstoffspeicher (8) und/oder aus der Wasserstoff-Pipeline (10) stammenden Wasserstoffs, vorzugsweise komprimierter Wasserstoff, an der mindestens einen Konvertierungseinheit (26); und
e) mindestens eine ausgangsseitig mit der mindestens einen Konvertierungseinheit (26) verbundene Aufladevorrichtung (30a bis 30d) für die Fahrzeuge mit batterie-elektrischem Antrieb.

2. System (2) nach Anspruch 1,
**dadurch gekennzeichnet, dass**
die mindestens eine Wasserstoffübergabevorrichtung (20a und 20b) und die mindestens eine Aufladevorrichtung (30a bis 30d) räumlich eng benachbart, vorzugsweise in einem Container, oder räumlich separiert, z. B. in unterschiedlichen Gehäusen, angeordnet sind.

3. System (2) nach Anspruch 1 oder 2,
**dadurch gekennzeichnet, dass**
der mindestens eine erste Förderstrang (12) und der mindestens eine zweite Förderstrang (22) systemisch voneinander getrennt und bestimmungsgemäss hinsichtlich des Drucks und der Temperatur des geförderten Wasserstoffs betreibbar sind.

4. System (2) nach einem der vorangehenden Ansprüche,
**dadurch gekennzeichnet, dass**
die mindestens eine Aufladevorrichtung als Schnellladestation (6) mit einem einzelnen Ladeplatz (30a) oder einer Mehrzahl von Ladeplätzen (30a bis 30d) ausgestaltet ist.

5. System (2) nach einem der vorangehenden Ansprüche,
**dadurch gekennzeichnet, dass**
die Aufladung von Fahrzeugen mit batterie-elektrischem Antrieb mit einer Ladeleistung von bis zu 500 kW pro Ladeplatz, typischerweise im Bereich von 40 bis 150 kW pro Ladeplatz, durchführbar ist.

6. System (2) nach einem der vorangehenden Ansprüche,
**dadurch gekennzeichnet, dass**
die mindestens eine Konvertierungseinheit als Brennstoffzelleneinheit (26), insbesondere eine Polymer-Elektrolyt-Membran-Brennstoffzelleneinheit, ausgestaltet ist, die über die Anzahl von zu Brennstoffzellen-Gruppen zusammengefassten Brennstoffzellen in der Kapazität zur Bereitstellung elektrischen Stroms skalierbar ist.

7. System (2) nach einem der vorangehenden Ansprüche,
**dadurch gekennzeichnet, dass**
die mindestens eine Konvertierungseinheit als Gasturbine zum Antrieb eines dynamo-elektrischen Generators ausgeführt ist.

8. System (2) nach einem der vorangehenden Ansprüche,
**dadurch gekennzeichnet, dass**
die wasserstoff-betriebene Schnelllstation modulweise aufgebaut ist, so dass sie auf- und wieder abbaubar ist und an einem neuen Ort genutzt werden kann.

9. System (2) nach einem der vorangehenden Ansprüche,
**dadurch gekennzeichnet, dass**
das System in einem mit einem LKW oder einem Zugwaggon verfahrbaren Container angeordnet ist.

10. System nach einem der vorangehenden Ansprüche,
**dadurch gekennzeichnet, dass**
die für die Aufladevorrichtung erzeugte und dort ggfs. nicht abgenommene elektrische Energie für andere Zwecke, insbesondere Einspeisung ins Netz oder andere elektrische Anwendungen, nutzbar ist.
